# EUROPEAN PATENT APPLICATION

(11) **EP 2 456 006 A1**
(43) Date of publication of application: **23.05.2012**
(21) Application number: 10799537.5
(22) Date of filing: 03.03.2010
(51) Int. Cl.: H01Q 1/24, H01Q 1/02, H04M 1/02

(54) **PORTABLE WIRELESS MACHINE**

(30) Priority: 16.07.2009 JP 2009167999
(71) Applicant: Panasonic Corporation, Kadoma-shi Osaka 571-8501 (JP)
(72) Inventor: UEJIMA, Hiroyuki, Chuo-ku Osaka 540-6207 (JP); KOYANAGI, Yoshio, Chuo-ku Osaka 540-6207 (JP); SATO, Noriyoshi, Chuo-ku Osaka 540-6207 (JP); NAKAMURA, Yasuhiro, Chuo-ku Osaka 540-6207 (JP)
(74) Representative: Grünecker, Kinkeldey, Stockmair & Schwanhäusser
(86) International application number: PCT/JP2010/001477
(87) International publication number: WO 2011/007473

(57) **Abstract**

There is provided a portable radio capable of facilitating assuring water-tightness of a neighboring area of power feed sections and assuring a stable state of connection between a conductor, such as an antenna, and a circuit board.

A portable radio includes an annular resilient member 13 sandwiched between a first case 11 and a second case 12; a flexible printed board 14 that is formed integrally with the annular resilient member 13 and that extends toward an area surrounded by the annular resilient member 13; an antenna section 15 and a first power feed section 19 that are provided on the flexible printed board 14; a circuit board 17 set in the area surrounded by the annular resilient member 13; an electric circuit section 1$ provided on the circuit board 17; and a second power feed section 20 electrically connected to the electric circuit section 18. The first power feed section 19 opposes the annular resilient member 13, and an inter-space dimension of an area sandwiched between the flexible printed board 14 and a rib 12b is smaller than a thickness dimension d2 of a part of the annular resilient member 13 that is to be sandwiched in the area, the thickness dimension being achieved under no-load conditions, with respect to a direction where the annular resilient member is sandwiched.

## Description

### <Technical Field>

The present invention relates to a portable radio that can be utilized for; for instance, a cell phone unit, a personal digital assistant (PDA), a portable music player, a portable game machine, and others. More particularly, the present invention relates to a structure of a neighborhood of an electrical contact point between an antenna or an earth line and an electric circuit.

### <Background Art>

A portable radio like; for instance, a cell phone unit, has recently been required to exhibit waterproof capability. Related art techniques described in connection with; for instance, Patent Document 1, Patent Document 2, and Patent Document 3, already exist as a waterproof structure of a portable radio, or the like.

Patent Document 1 shows that a power feed protrusion is formed in a portion of power feed hardware (an antenna guide) that holds a whip antenna in a slidable manner and that the power feed protrusion is connected to a circuit board by way of a mutual communication hole by way of a waterproof gasket.

Patent Document 2 shows that an antenna conductor and an earth plane (an earth line) conductor are affixed to a waterproof seal and that the waterproof seal is brought into close contact with an overall outer circumference of an enclosure, to thus make the enclosure watertight. Moreover, the antenna conductor and the earth plane conductor are structured so as to be respectively, electrically connected to and supplied with electric power from a circuit board in an enclosure by way of a hole made in the outer circumference of the enclosure.

Patent Document 3 shows that an enclosure is made up of an upper case and a lower case. A frame-shaped waterproof gasket exists in a joint between the upper case and the lower case. An antenna element is configured so as to be embedded in the waterproof gasket.

### <Related Art Documents>

### <Patent Documents>

Patent Document 1: JP-A-2009-010792
Patent Document 2: JP-A-7-99403
Patent Document 3: JP-A-6-37876

### <Summary of the Invention>

### <Problems that the Invention is to solve>

However, conventional techniques, such as those mentioned above, encounter difficulty in assuring waterproof characteristic in a neighborhood of the power feed sections; namely, a connection between a land (an exposed electrode) on the circuit board and the antenna element. Further, a connecting status may become unstable, or variations may also occur in antenna characteristics.

For instance, in the case of the technique described in connection with Patent Document 1, it is not easy to make the location at which the power feed protrusion passes through the mutual communication hole waterproof without fail and implement a stable connecting status. In the case of the technique described in connection with Patent Document 2, it is not easy to assure a stable connecting status at a location where the respective conductors and the circuit are connected together by way of the hole and to make the location waterproof without fail. In the case of the technique described in connection with Patent Document 3, assuring water-tightness is easy, but it is difficult to assemble the enclosure, which in turn poses difficulty in mass-production of the enclosure. Further, since it becomes difficult to sustain uniformly the layout and shape of the antenna element, variations may occur in antenna characteristics.

The present invention aims at providing a portable radio that makes it easier to assure water-tightness in a vicinity of a power feed section and that can easily assure a stable connecting status between a conductor, like an antenna, and a circuit board.

### <Means for Solving the Problems>

A portable radio of the present invention is directed toward a portable radio having an enclosure in which a first case and a second case are combined, the radio comprising: an annular resilient member sandwiched between the first case and the second case; a flexible printed board that is formed integrally with the annular resilient member and that is extended toward an area surrounded by the annular resilient member; an antenna section provided on the flexible printed board; a first power feed section provided on the flexible printed board and electrically connected to the antenna section; a circuit board provided in the area surrounded by the annular resilient member; an electric circuit section provided on the circuit board; and a second power feed section electrically connected to the electric circuit section, wherein the first power feed section opposes the annular resilient member; and an inter-space dimension of an area interposed between the flexible printed board and a part of the enclosure opposing the flexible printed board is smaller than a thickness dimension of a part of the annular resilient member that is to be sandwiched in the area, the thickness dimension being achieved under no-load conditions, with respect to a direction where the annular resilient member is sandwiched.

In the portable radio, when the first case and the second case of the enclosure are combined together, the first power feed section is pressed in a sandwiching direction by means of resilient force developing in the annular resilient member. The first power feed section and the second power feed section are thereupon electrically connected together, and the antenna section and the electric circuit section are also electrically connected. Specifically, water-tightness of an area of connection and stable electric connectivity are assured by means of the resilient force of the annular resilient member.

In the portable radio of the present invention, the flexible printed board and the antenna section are extended at least up to a position, where the flexible printed board and the antenna section oppose the second power feed section, toward the area surrounded by the annular resilient member; and the second power feed section is provided on a surface of the circuit board opposing the first power feed section.

In the present portable radio, the power feed sections are provided on the circuit board, which makes it possible to curtail the number of components required to make a connection between the power feed sections. Thus, assembly of the portable radio also becomes facilitated.

In the portable radio of the present invention, at least a portion of the flexible printed board is formed in an annular shape along an inner circumference of the area surrounded by the annular resilient member, and a portion of the flexible printed board crosses the area surrounded by the annular resilient member.

In the present portable radio, a portion (a bridging section) of the flexible printed board is formed so as to cross the area surrounded by the annular resilient member. Hence, positions where the power feed sections are to be positioned can be aligned to each other with a high degree of accuracy. Specifically, since the first power feed section and the second power feed section are positioned at the location of the bridging section, positional accuracy is substantially determined by geometry of the flexible printed board. Accordingly, variations become less likely to arise in relative mount positions during assembly, so antenna characteristics become less susceptible to variations.

Moreover, in the portable radio of the present invention, the first power feed section or the second power feed section has a protrusion that exhibits electrical conductivity.

In the present portable radio, the first power feed section and the second power feed section can be electrically connected by the protrusion, which contributes to a reduction in the number of components and improvement in productivity.

The portable radio of the present invention further includes a power feed plate for electrically connecting the first power feed section to the second power feed section.

In the portable radio, since the first power feed section and the second power feed section are connected by way of the plate, a distance between the circuit board and the antenna section can be increased. Specifically, the antenna section is sufficiently spaced apart from a ground pattern on the circuit board, where antenna resistance to radiation can be enhanced, and high antenna characteristics can be assured.

In the portable radio of the present invention, the annular resilient member has an annular water proof section sandwiched between the first case and the second case and an auxiliary power feed section that extends from a portion of the annular waterproof section toward an area surrounded by the annular waterproof section, wherein a thickness dimension of the annular waterproof section is smaller than a thickness dimension of the auxiliary power feed section with respect to a direction in which the annular waterproof section is sandwiched.

In the present portable radio, water-tightness of the power feed sections and an electrical connection can be readily assured, respectively. Specifically, water-tightness can be assured by load that can be controlled by a thickness dimension of the annular waterproof section of the annular resilient member. Further, an electrical connection between the first power feed section and the second power feed section can be assured by of load that can be controlled by a thickness dimension of the auxiliary power feed section of the annular resilient member. Since the thickness dimension of the annular waterproof section is smaller than the thickness dimension of the auxiliary power feed section with respect to the direction in which the annular waterproof section is sandwiched; hence, appropriate load can be exerted on respective locations.

A portable radio of the present invention is also directed toward a portable radio having an enclosure that is a combination of a first case with a second case, the radio comprising: an annular resilient member sandwiched between the first case and the second case; a flexible printed board that is formed integrally with the annular resilient member and that extends toward an area surrounded by the annular resilient member; an earth line section laid on the flexible printed board; a first electrical connection section that is provided on the flexible printed board and that is electrically connected to the earth line section; a circuit board set in the area surrounded by the annular resilient member; a ground section laid on the circuit board; and a second electrical connection section electrically connected to the ground section, wherein the first electrical connection section opposes the annular resilient section; and an area of spacing interposed between the flexible printed board and a part of the enclosure opposing the flexible printed board is smaller than a thickness dimension of a part of the annular resilient member that is to be sandwiched in the area of spacing, the thickness dimension being achieved under no-load conditions, with respect to a direction where the annular resilient member is sandwiched.

In the portable radio, when the first case and the second case of the enclosure are combined together, the first electrical connection section and the second electrical connection section are pressed by the resilient force developing in the annular resilient member with respect to the direction in which the annular resilient member is sandwiched. The earth line section and the ground section on the circuit board are thereupon electrically connected together. Specifically, water-tightness of the connection and the stable electric connectivity are assured by resilient force of the annular resilient member. The earth line section contributes to assuring an appropriate characteristic of the antenna.

In the present portable radio of the present invention, a reactance element is interposed between the ground section and the second electrical connection section.

In the portable radio, an electric characteristic of the earth line section can be appropriately controlled by the reactance element.

### <Advantage of the Invention>

The present invention makes it possible to assure water-tightness of a neighborhood of power feed sections readily and also assure readily a stable state of connection between a conductor, such as an antenna, and a circuit board.

### <Brief Description of the Drawings>

Fig. 1 is a plan view showing an example layout of principal constituent elements provided within a portable radio of an embodiment of the present invention.
Fig. 2 is a partially enlarged cross sectional view of a neighboring area of an example power feed section when viewed along a cross sectional plane taken along line A-A' shown in Fig. 1.
Fig. 3 is an exploded perspective view showing example principal constituent elements of the portable radio shown in Fig. 1.
Fig. 4 is an exploded perspective view showing an example configuration of the neighboring area of the power feed section shown in Fig. 2.
Fig. 5 is a plan view showing a configuration of a first modification of the portable radio shown in Fig. 1.
Fig. 6 is a partially enlarged cross sectional view of the neighboring area of the example power feed section when viewed along a cross sectional plane taken along line B-B' shown in Fig. 5.
Fig. 7 is a plan view showing a configuration of a second modification of the portable radio shown in Fig. 1.
Fig. 8 is an oblique perspective view showing a specific example of a power feed section having a protrusion of the embodiment of the present invention.
Fig. 9 is a plan view showing a portion of a configuration of a third modification of the portable radio shown in Fig. 1.
Fig. 10 is a plan view showing an example modification of the configuration shown in Fig. 9.
Fig. 11 is a plan view showing a portion of a configuration of a fourth modification of the portable radio shown in Fig. 1.

### <Embodiment for Implementing the Invention>

A portable radio of an embodiment of the present invention will be described hereunder by reference to the drawings.

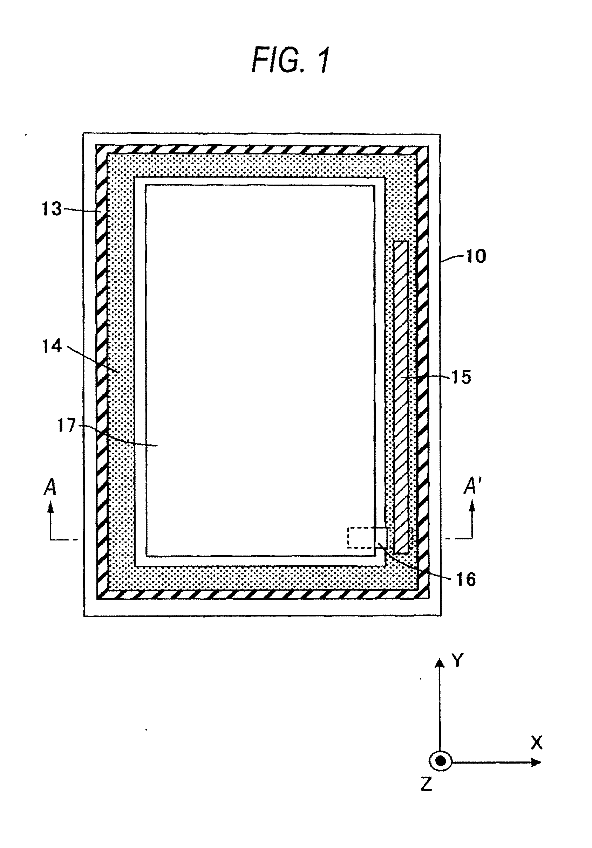

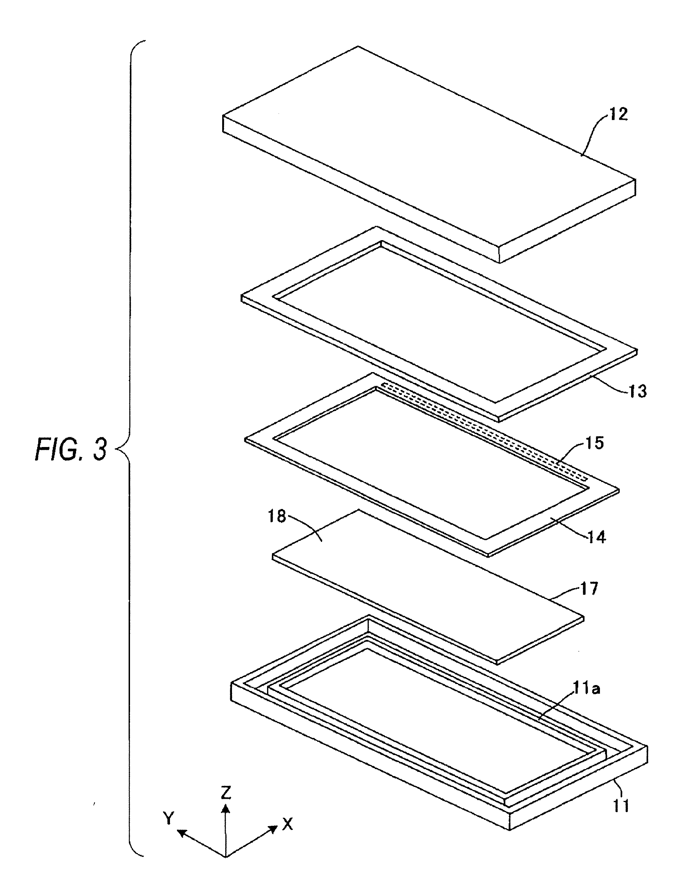

Fig. 1 shows a brief overview of a layout of principal constituent elements provided within the portable radio of the embodiment of the present invention. Fig. 3 shows an exploded state of the portable radio as an oblique perspective view. The portable radio shown in Fig. 1 is; for instance, a cell phone unit, and equipped with a radio communication function and an antenna.

An enclosure 10 of the portable radio assumes an unchangeable fixed shape and is built by means of combination of a first case 11 with a second case 12 shown in Fig. 3 in their thickness direction (in a Z-axis direction) through; for instance, fitting. As shown in Fig. 3, a circuit board 17 equipped with an electric circuit section 18, a flexible printed board 14, and an annular resilient member 13 are housed within internal space of the enclosure 10. The electric circuit section 18 includes; for instance, a radio circuit and a matching circuit. An antenna section 15 formed in; for instance, a print pattern of metal (a conductor), is laid over the flexible printed board 14. When the antenna section 15 is formed as a print pattern, printed copper foil is usually processed into a predetermined shape by means of etching, or the like, to thus be created. In the meantime, the antenna section 15 can also be formed from an individual component other than the print pattern.

As shown in Figs. 1 and 3, the enclosure 10 and the circuit board 17 assume a rectangular planar shape. The circuit board 17 is housed within the annular resilient member 13 within an X-Y plane.

The flexible printed board 14 is formed into an annular shape so as to be able to surround an entire outer circumference of the circuit board 17 in the embodiment. Specifically, the outer circumference and an inner circumference of the flexible printed board 14 are formed into a rectangular shape, respectively. An outline of the inner circumference of the flexible printed board 14 is made slightly larger than an outline of the outer circumference of the circuit board 17. Further, the outline of the outer circumference of the flexible printed board 14 is made slightly larger than the outline of the inner circumference of the same. Further, the outline of the outer circumference of the flexible printed board 14 is a size that makes it possible to accommodate the flexible printed board 14 in interior space of the enclosure 10.

The word "annular shape" includes a closed circular shape that makes a circle so as to surround a certain region, a shape having a rectangular outline like a frame, and the like.

As shown in Fig. 1, the flexible printed board 14 is arranged along a position close to the outer circumference of the enclosure 10. The circuit board 17 can be placed at inside of the inner circumference of the flexible printed board 14. The shape of the flexible printed board 14 does not always need to be formed into the annular shape so as to surround the flexible printed board 14. The flexible printed board 14 can also be disposed only in a vicinity of the antenna section 15.

The annular resilient member 13 is a member exhibiting elasticity to primarily realize waterproof capability; for instance, a nonconductive rubber gasket. A planar shape of the annular resilient member 13 assumes an annular shape as does the flexible printed board 14. Both an inner circumference and an outer circumference of the annular resilient member 13 are formed so as to assume; for instance, a rectangular planar shape. The outer circumference of the annular resilient member 13 is made larger than the outer circumference of the flexible printed board 14 and into a size that enables accommodation of the annular resilient member 13 in the interior space of the enclosure 10. The flexible printed board 14 is superposed on the annular resilient member 13 in its widthwise direction and fastened by means of an adhesive, or the like. Thus, the flexible printed board 14 and the annular resilient member 13 are assembled into one.

The embodiment provides an example in which various constituent elements are formed into rectangular shapes. However, the constituent elements may also be formed into various conceivable shapes; for instance, substantially oval shapes.

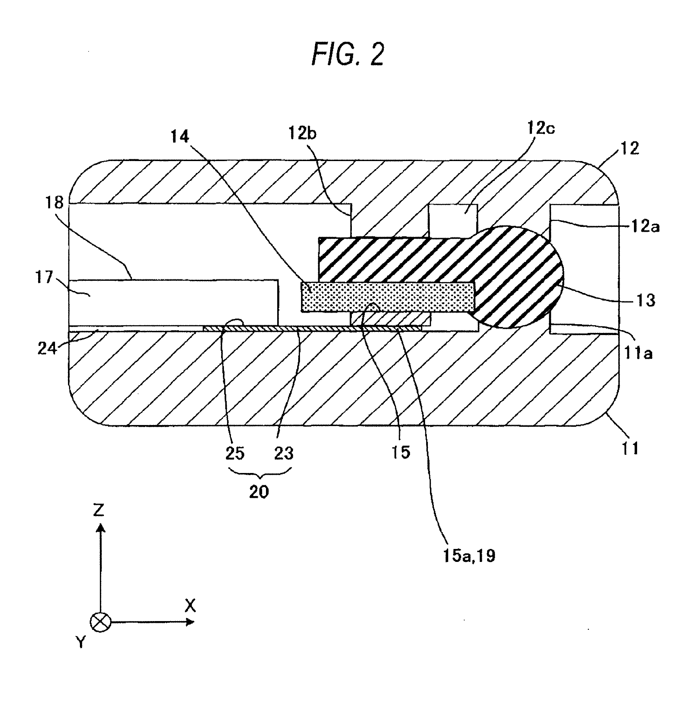

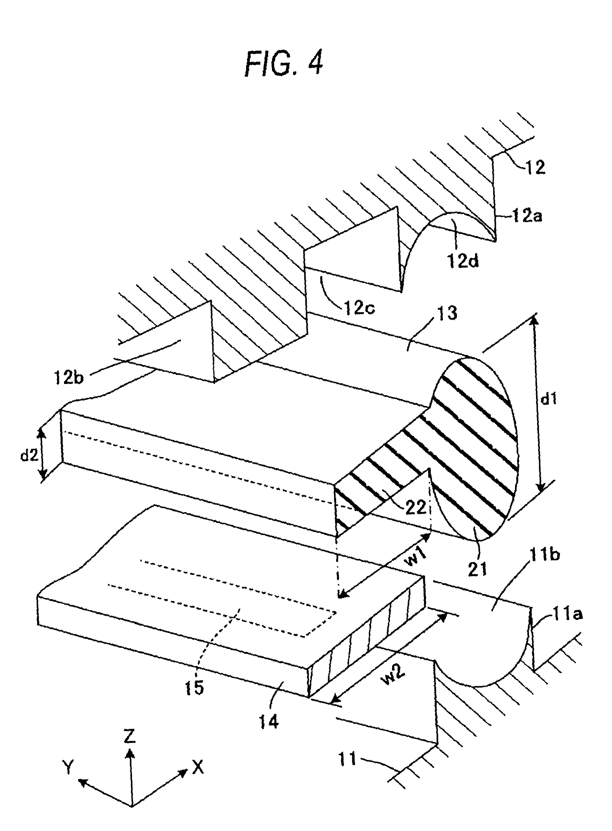

Figs. 2 and 4 show detailed configurations of a neighboring area of a power feed section 16 provided for feeding electric power to the antenna section 15. Figs. 2 and 4 show states of the neighboring area of the power feed section when viewed along a cross sectional plane taken along line A-A' shown in Fig. 1.

As shown in Fig. 4, an annular waterproof section 21 and an auxiliary power feed section 22 are made integrally as the annular resilient member 13. As shown in Fig. 4, the annular waterproof section 21 assumes a curved shape whose center bulges up and down along the Z-axis direction, and a cross-sectional profile of the annular waterproof section 21 is a substantially elliptical shape. The auxiliary power feed section 22 is an extension (an extended portion) extending from at least a portion of the annular waterproof section 21 toward an inner circumference side of the annular waterproof section 21; specifically, toward the circuit board 17. The auxiliary power feed section 22 is made in the form of a flat plate. A thickness dimension d1 of the annular waterproof section 21 is larger than a thickness dimension d2 of the auxiliary power feed section 22.

In the embodiment shown in Fig. 4, a width w1 of the auxiliary power feed section 22 achieved in the X-axis direction and a width w2 of the flexible printed board 14 achieved in the X-axis direction are made substantially equal to each other. In a state shown in Fig. 4, a lower surface of the auxiliary power feed section 22 is superposed on an upper surface of the flexible printed board 14 and bonded into one.

As shown in Fig. 3, an inwardly protruding rib 11a is formed inside (in the direction Z) within the first case 11. The rib 11a is made into an annular shape as is the annular waterproof section 21. Each of interior and outer circumferences of the rib 11a assumes a rectangular outline. Further, a rib 12a assuming the same shape as that of the rib 11a is also formed so as to protrude toward the inside of the second case 12 (in the direction Z).

As shown in Fig. 4, an upper surface 11b of the rib 11a opposing the annular waterproof section 21 of the annular resilient member 13 makes up a curved indentation so as to conform to the shape of the annular waterproof section 21. Likewise, a lower surface 12d of the rib 12a opposing the annular waterproof section 21 forms a curved indentation in conformance with the shape of the annular waterproof section. Accordingly, a lower surface of the annular waterproof section 21 is brought into contact with the upper surface 11b of the rib 11a, and an upper surface of the annular waterproof section 21 is brought into contact with the lower surface 12d of the rib 12a. When the first case 11 and the second case 12 are assembled together in this state, the annular resilient member 13 is sandwiched between the rib 11a and the rib 12a as shown in Fig. 2 and can be fixed in this sandwiched state.

The thickness dimension d1 of the annular waterproof section 21 of the annular resilient member 13 is determined in consideration of a dimension of space between the rib 11a and the rib 12a achieved when the first case 11 and the second case 12 remain assembled together and appropriate pressure required to assure waterproof capability.

As shown in Figs. 2 and 4, a rib 12b is formed at a position that is adjacent to the rib 12a in a direction of an inner circumference thereof. Space 12c is formed between the rib 12a and the rib 12b. The rib 12b can also be laid at a position opposing the auxiliary power feed section 22 and formed into an annular shape in much the same way as with the rib 12a. Alternatively, the rib 12b can also be formed at only a position where the rib 12b opposes the annular waterproof section 21. A leading end face of the rib 12b opposing the auxiliary power feed section 22 is formed into a flat shape in conformance to the shape of the surface of the auxiliary power feed section 22.

A ground section 24 is formed in a portion of a lower surface of the circuit board 17 shown in Fig. 2. The ground section 24 is formed from; for instance, a print pattern. Moreover, some exposed electrodes (lands) are formed on a surface of a portion of the lower surface of the circuit board 17 except the ground section 24 so as to be electrically isolated from the ground section 24. The electrodes include a power feed land 25 connected to the radio circuit (not shown), or the like, in the electric circuit section 18.

In order to electrically connect the radio circuit section with the antenna section 15 on the flexible printed board 14, to thus feed electric power to the antenna, the power feed section 16 is provided. The power feed section 16 is built from a first power feed section 19 and a second power feed section 20. In the embodiment shown in Fig. 2, the first power feed section 19 is formed from an electrode 15a made in a vicinity of one end (on a lower surface) of the antenna section 15. The second power feed section 20 is formed from the power feed land 25 and a power feed plate 23.

The power feed plate 23 is made of conductive thin-plate-like metal, and one end of the power feed plate 23 is electrically connected to the power feed land 25. As shown in Fig. 2, a position where the power feed plate 23 opposes the power feed land 25 on the circuit board 17 in a thickness direction is taken as one end of the power feed plate 23. Further, a position where the power feed metal plate 23 opposes the electrode 15a of the antenna section 15 in the thickness direction is taken as another end of the power feed plate 23. The power feed plate 23 extends from its one end to the outside toward the flexible printed board 14 up to the other end.

The thickness dimension d2 of the auxiliary power feed section 22 of the annular resilient member 13 is determined in such a way that suppression force exerted on the power feed section 16 in the thickness direction becomes appropriate when the first case 11 and the second case 12 are assembled with the annular resilient member 13 and the flexible printed board 14 sandwiched therebetween as shown in Fig. 2. Accordingly, a dimension of space between an upper surface of the flexible printed board 14 and a portion of the enclosure (a lower surface of the rib 12b; see Fig. 4) opposing in its thickness direction the upper surface is determined so as to become, in a direction parallel to a direction in which the auxiliary power feed section is sandwiched (the Z-axis direction), smaller than a thickness dimension (d2) of the auxiliary power feed section 22, which will be achieved under no load conditions, that is to be sandwiched in the space.

Accordingly, when the first case 11 and the second case 12 are assembled with the annular resilient member 13 and the flexible printed board 14 sandwiched therebetween as shown in Fig. 2, the other end of the power feed plate 23 comes into an electrical connection with the electrode 15a of the antenna section 15. The thus-contacted area of the antenna section 15 is pressed in the thickness direction (the Z-axis direction) by means of resilient force of the auxiliary power feed section 22 of the annular resilient member 13. Therefore, the power feed section 16 can appropriately maintain the state of the connection between the electrode 15a of the antenna section 15 and the power feed plate 23.

The second case 12 can also be configured by abolishing the space 12c, to thus combine the rib 12a and the rib 12b into one.

In order to maintain, by use of the annular resilient member 13, the water proof capability and a state of an appropriate electrical connection achieved by the power feed section 16, the following points are important.

If suppression force F1 exerted on the annular waterproof section 21 (force exerted on a unit area) is too great, the force will create space between the first case 11 and the second case 12 that make up the enclosure 10, which may contrarily deteriorate water-tightness. Accordingly, the annular waterproof section 21 must be pressed by means of appropriate force that makes it possible to maintain required waterproof capability but will not make space.

Force F2 exerted to press the auxiliary power feed section 22 (force exerted on a unit area) must be designed in such a way that force F3 (force exerted on a unit area) required to sustain a state of an appropriate electrical connection is exerted on an electrical contact point between the first power feed section 19 and the second power feed section 20. A relationship between the force F2 for suppression and the force F3 exerted on the electrical contact point is determined according to an area of the electrical contact point.

When waterproof capability commensurate with a depth of; for instance, about one meter, is actually imparted to the portable radio, the force F3 exerted on the electrical contact point must be increased to 10 to 100 times as large as the force F1 for pressing the annular waterproof section 21. A method, such as that provided below, is conceivable to share one annular resilient member 13 between the annular waterproof section 21 and the auxiliary power feed section 22 and exert appropriate suppression force on respective areas.
(1) A stroke is regulated in such a way that the suppression forces become variable, by means of changing the thickness of the annular waterproof section 21 and the auxiliary power feed section 22.
(2) Heights of protrusions of the ribs 11a, 12a, and 12b are regulated in such a way that suppression forces generated by the protrusions become variable.

As shown in Fig. 1, the antenna section 15 is set on the flexible printed board 14 disposed outside the circuit board 17, whereby a distance between the antenna section 15 and the ground section 24 on the circuit board 17 can be increased, whereby deterioration of antenna performance can be prevented. The circuit board 17 and the antenna section 15 are conceived to be disposed so as to be spaced apart a distance of; for instance, several millimeters. Although a limit is imposed on the distance according to the size of the enclosure 10 and the size of available space. However, an average distance for a wavelength λ of a radio frequency used is determined so as to come to a value of 0.01λ or more; preferably, a value of about 0.1λ to 0.2λ.

### (First Modification)

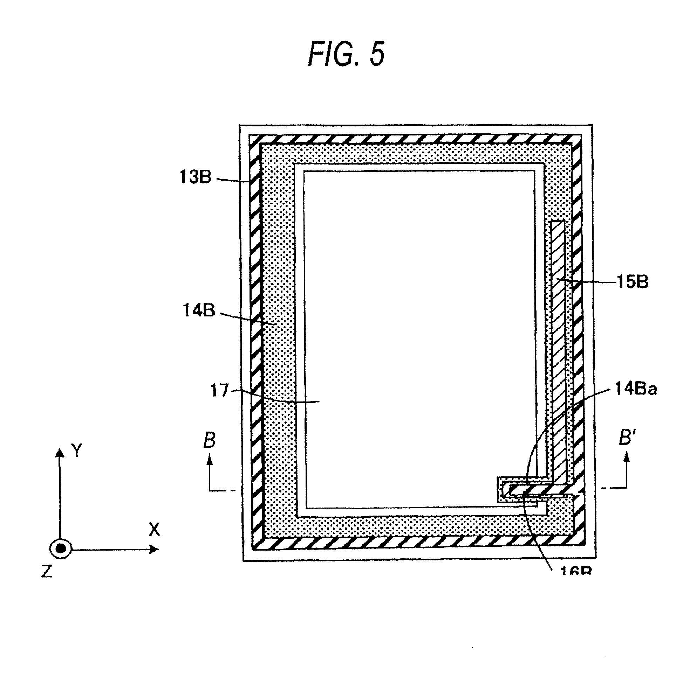

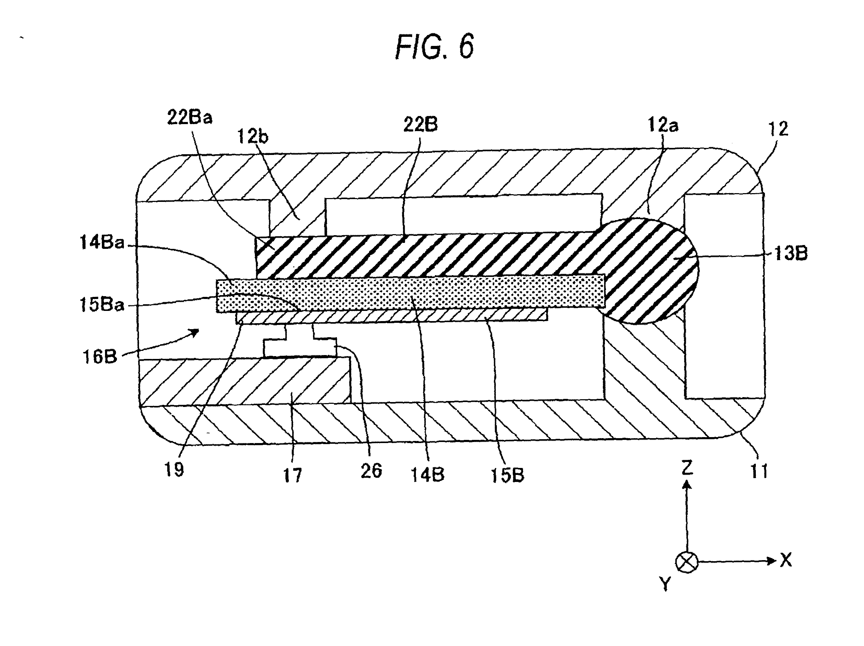

Fig. 5 shows a configuration of a first modification of the portable radio shown in Fig. 1. Fig. 6 shows a configuration of a neighboring area of the power feed section when viewed from a cross sectional plane taken along line B-B' shown in Fig. 5. In Figs. 5 and 6, elements corresponding to their counterparts employed in the configurations shown in Figs. 1 through 4 are assigned the same reference numerals. In the first modification, an explanation is primarily given to a configuration of a difference between the configuration of the portable radio shown in Fig. 1 and the configuration of the portable radio of the first modification.

As with the flexible printed board 14, a flexible printed board 14B shown in Figs. 5 and 6 is formed in an annular shape along an inner circumference of an area surrounded by the annular resilient member 13. However, the flexible printed board 14B has in part a different shape. Specifically, the flexible printed board 14B has an extension 14Ba at a position on line B-B' shown in Fig. 5, where the extension 14Ba extends from a circumference (i.e., a portion of the annular area of the flexible printed board 14B) toward the inner circumference. Further, a leading end of the extension 14Ba extends up to a position where the leading end opposes at least a portion of the circuit board 17 in the thickness direction. An antenna section 15B on the flexible printed board 14B also has an extension 15Ba that extends up to a neighborhood of the leading end of the extension 14Ba.

As with the foregoing annular resilient member 13, an annular resilient member 13B shown in Figs. 5 and 6 is also formed in an annular shape but assumes in part a different shape. Specifically, an extension 22Ba is formed in an auxiliary power feed section 22B of the annular resilient member 13B so as to oppose the extension 14Ba in conformance to the shape of the flexible printed board 14B. A leading end of the extension 22Ba extends up to a position where the leading end opposes at least a portion of the circuit board 17 in the thickness direction.

An electrode is formed on a lower surface of the extension 15Ba of the antenna section 15B, which makes up the first power feed section 19. In the meantime, an exposed electrode (a land) on the circuit board 17 is attached in such a way that a power feed pin 26 made of a conductor protrudes out of the surface of the circuit board 17 in the thickness direction. The power feed pin 26 makes up the second power feed section 20.

Therefore, when the respective constituent elements are assembled as shown in Fig. 6, the electrode on the lower surface of the extension 15Ba that is the first power feed section 19 comes into contact with a leading end of the power feed pin 26 that is the second power feed section 20. The contact surface is pressed in an opposing direction (i.e., the thickness direction) by resilient force of the auxiliary power feed section 22B. Accordingly, in a power feed section 16B, the electrode on the lower surface of the extension 15Ba and the leading end of the power feed pin 26 remain in contact with each other, to thus be electrically connected.

As shown in Fig. 6, the rib 12b of the second case 12 is formed at a position where it opposes the power feed pin 26. Accordingly, the rib 12b presses a point on the auxiliary power feed section 22B that opposes the power feed pin 26, so that the contact surface that will arise between the lower electrode of the extension 15Ba and the leading end of the power feed pin 26 can be pressed.

In the case of the configuration shown in Figs. 5 and 6, the power feed pin 26 on the circuit board 17 and the electrode of the antenna section 15B directly oppose each other, which obviates a necessity for the power feed plate 23, so that the configuration of the power feed section 16 is simplified.

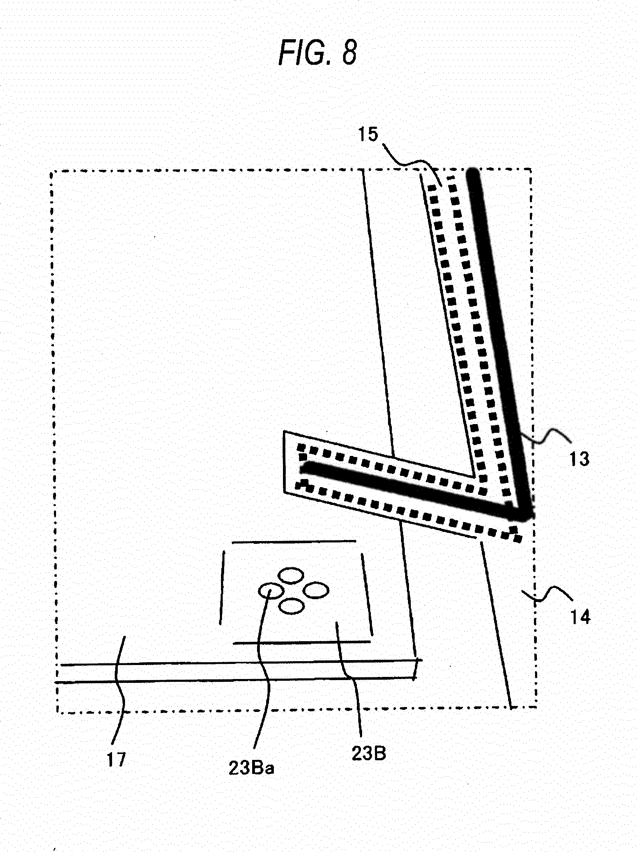

In the configuration shown in Fig. 6, the power feed pin 26 provided on the power feed land on the circuit board 17 is provided as the second power feed section 20. Alternatively, a power feed plate 23B, such as that shown in Fig. 8, may also be mounted in place of the feed pin 26 by means of; for instance, soldering, to the power feed land on the circuit board 17. A plurality of small protrusions 23Ba protrude out of a surface of the power feed plate 23B. Since the protrusions 23Ba exhibit conductivity, they can be electrically connected to the opposing first power feed section 19. A conceivable height of the protrusions 23Ba is; for instance, 0.1 mm or thereabouts. Further, the power feed plate 23B, such as that shown in Fig. 8, may also be placed on the power feed land of the antenna section 15 of the flexible printed board 14, and the power feed plate 23B may also be utilized as the first power feed section 19.

### (Second Modification)

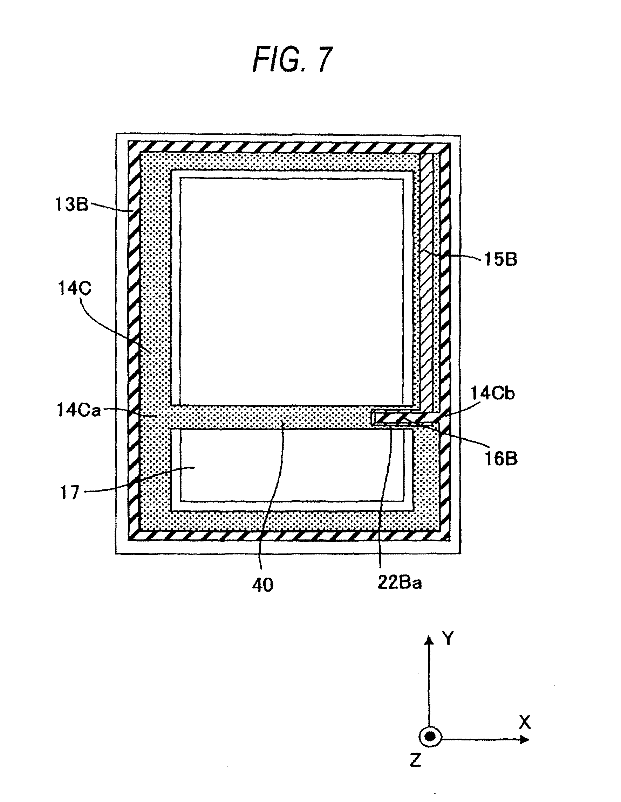

Fig. 7 shows a configuration of a second modification of the portable radio shown in Fig. 1. In Fig. 7, elements corresponding to the configuration shown in Figs. 1 through 6 are assigned the same reference numerals. In the second modification, explanations are primarily given to a modified configuration originating from the configuration of the portable radio shown in Fig. 1 or Fig. 5.

As with the flexible printed board 14, a flexible printed board 14C shown in Fig. 7 is formed into an annular shape along an inner circumference of an area surrounded by the annular resilient member 13. However, the flexible printed board 14C has in part a different shape. Specifically, the flexible printed board 14C has a bridging section 40 that crosses the area surrounded by the annular resilient member 13. The bridging section 40 is a plate-like area that acts as a bridge between an arbitrary point 14Ca on a left end of the flexible printed board 14C and an arbitrary point 14Cb on a right side of the printed board 14C shown in Fig. 7 and that also has a predetermined width.

As with the first modification, a lower end of the antenna section 15B on the flexible printed board 14C stretches along the bridging section 40, extending up to at least the power feed section 16B (a position where the antenna section opposes a portion of the circuit board 17).

An annular resilient member 13B shown in Fig. 7 is formed in an annular shape as is the same manner as the foregoing annular resilient member 13 but has in part a different shape. Specifically, in conformance with a geometry of the flexible printed board 14C and a geometry of the antenna section 15B, the extension 22Ba is formed at a point on the auxiliary power feed section 22 of the annular resilient member 13B where the extension opposes the extension 15Ba of the antenna section 15B. The leading end of the extension 22Ba extends up to a position where the leading end opposes a part of the circuit board 17 in its thickness direction.

The position where the power feed section 16B is to be placed can also be changed as necessary. For instance, supplying power feed sections in a vicinity of the center of the bridging section 40 is also conceivable. In the case of the configuration shown in Fig. 7, since the power feed section 16B is on the bridging section 40, a position where the power feed section 16B is to be formed is determined by the geometry of the flexible printed board 14C. Since positional shifts, which would otherwise be caused by deformation, do not occur, highly accurate positioning becomes possible. Accordingly, the position of the power feed section 16B is less apt to variations, and characteristics of the antenna become stable.

Incidentally, the preceding descriptions are based on the assumption of one enclosure. However, many portable radios have a plurality of enclosures and perform opening and closing by means of folding or sliding operation. When the portable radio has a plurality of enclosures, the portable radio is built as a result of; for instance, an upper enclosure and a lower enclosure being joined by way of a hinge, or the like. Such a portable radio is also envisaged to assume the following configuration, in which the circuit board 17 equipped with an electric circuit section, such as a radio circuit, and the annular resilient member 13 are accommodated in either the upper enclosure or the lower enclosure; and in which the flexible printed board 14 including the antenna section 15 and the annular resilient member 13 are accommodated in the other enclosure.

### (Third Modification)

Explanations have been given thus far to the case where the member that is an integrated combination of the annular resilient member 13 with the flexible printed board 14 is utilized to accomplish an electrical connection of the power feed section of the antenna section 15. A structure analogous to the structure can also be applied to an electrical connection of an earth line. The earth line is a component used for electrically forming an element corresponding to a ground surface utilized by an antenna. The earth line is connected to the ground section 24 on the circuit board 17.

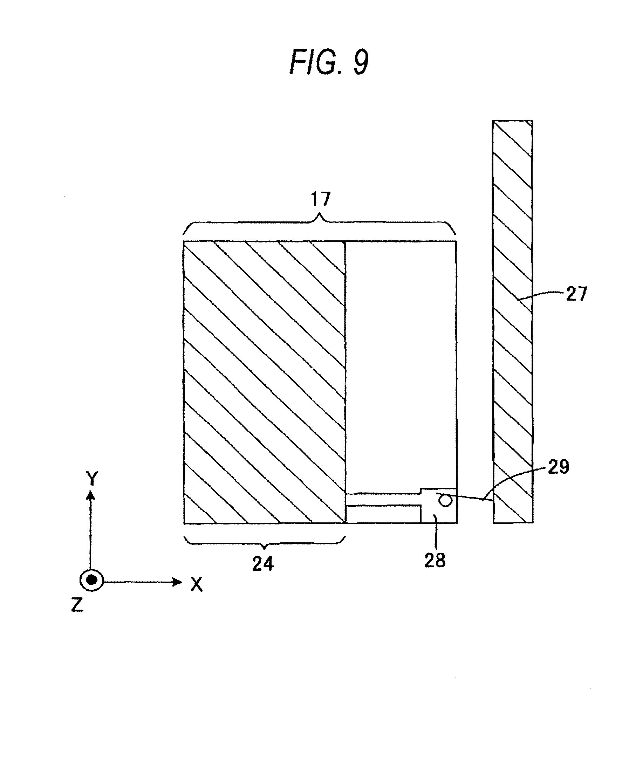

Fig. 9 shows a portion of a configuration of a third modification of the portable radio shown in Fig. 1. Although a portion of the third modification shown in Fig. 9 is not illustrated, an earth line section 27 is used in place of the antenna section 15 or the antenna section 15B. Further, a first electrical connection section and a second electrical connection section are used in place of the first power feed section 19 and the second power feed section 20. Except the configuration described above, the portable radio of the third modification has a foregoing configuration analogous to the portable radio. In Fig. 9, elements corresponding to their counterparts in the configuration shown in Fig. 1 through 8 are assigned the same reference numerals. In relation to the third modification, explanations are primarily given to a modified configuration originating from the configuration of the portable radio shown in Fig. 1, Fig. 5, or Fig. 7.

Although the flexible printed board 14 is not shown in Fig. 9, the earth line section 27 can also be formed as a print patter on the flexible printed board 14 as is the antenna section 15 or 15B. Alternatively, the earth line section 27 can also be formed from an individual component other than the print pattern of the flexible printed board 14. Moreover, although not illustrated in Fig. 9, the flexible printed board 14 is formed integrally with the annular resilient member 13. For instance, as in the case shown in Fig. 2, the annular resilient member 13 and the flexible printed board 14 extend toward an interior of the annular resilient member 13.

The electrical connection section 29 shown in Fig. 9 has the first electrical connection section electrically connected to the earth line section 27 and the second electrical connection section electrically connected to the ground section 24. The electrical connection section 29 has a configuration analogous to that of the power feed sections 16 and 16B shown in Figs. 1 and 5. The electrical connection section 29 connects the earth line section 27 to a land (electrode) 28 on the circuit board 17. The land 28 is electrically connected to the ground section 24 on the circuit board 17. The land 28 is an example of the second electrical connection section. In other respects, the configuration of the portable radio is analogous to the configuration shown in Figs. 1 and 2.

Accordingly, the member that is a combination of the annular resilient member 13 with the flexible printed board 14 is used even in the vicinity of the electrical connection section 29 for connecting the earth line section 27 for antenna use to the circuit board 17. Thus, stable electrical connection performance can be acquired without impairing water-tightness.

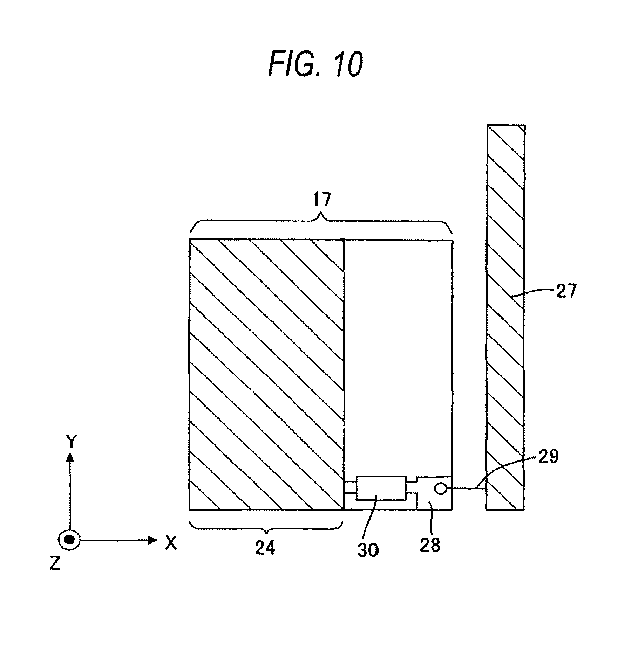

Fig. 10 shows an example modification of the configuration shown in Fig. 9. In the example configuration shown in Fig. 10, a reactance element 30 is interposed between the land 28 and the ground section 24 on the circuit board 17. An envisaged specific example of the reactance element 30 is a coil and a capacitor. The reactance element 30 can be utilized for regulating an electrical characteristic of the earth line section 27.

### (Fourth Modification)

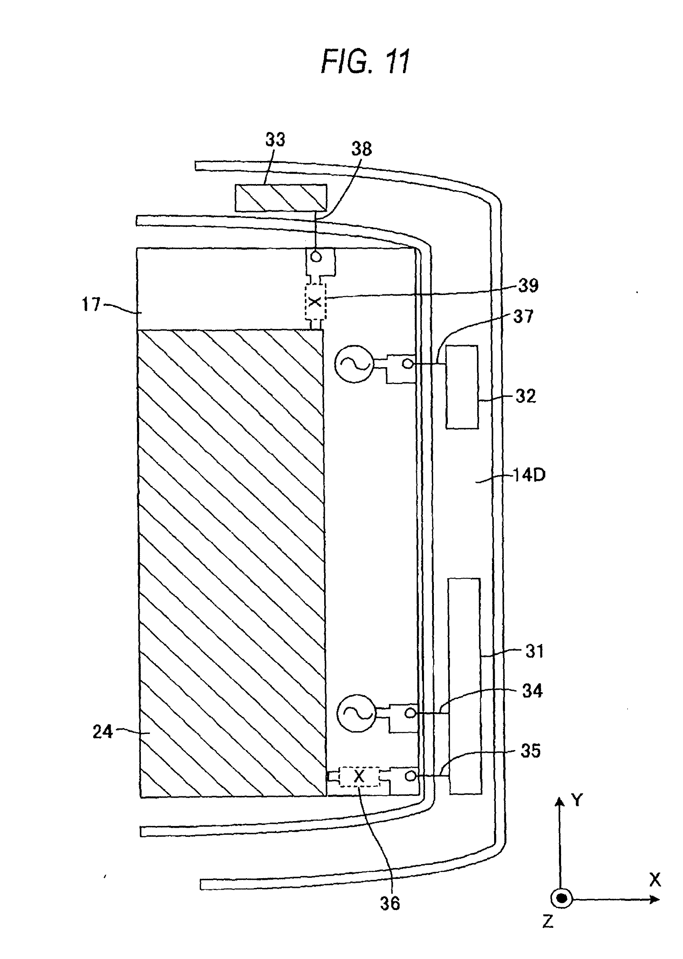

Fig. 11 shows a portion of a configuration of a fourth example modification of the portable radio shown in Fig. 1. The configuration shown in Fig. 11 is envisaged to have a plurality of constituent elements that are mounted in the portable radio so as to function as an antenna, such as an antenna section and an earth line section. Specifically, an antenna section 31, an antenna section 32, and an earth line section 33 are provided in the form of; for instance, print patterns, on a flexible printed board 14D. The flexible printed board 14D assumes the same geometry as that of the flexible printed board 14.

The antenna section 31 is an antenna section that can make up an inverted F antenna and assumes a strip-shaped shape that extends in the Y-axis direction. An electrode for power feeding purpose laid on the antenna section 31 is electrically connected to the electrode on the circuit board 17 by way of a power feed section 34 and connected to the radio circuit, or the like, on the circuit board 17. The ground electrode laid on the antenna section 31 shown in Fig. 11 is connected to the electrode on the circuit board 17 by way of an electrical connection section 35 and electrically connected further to the ground section 24 by way of a reactance element 36, as required.

The antenna section 32 assumes a strip-shaped shape extending in the Y-axis direction. The power feed electrode laid in the antenna section 32 is electrically connected to the electrode on the circuit board 17 by way of a power feed section 37 and connected to the radio circuit, or the like, on the circuit board 17.

The earth line section 33 has a strip-shaped geometry extending in the X-axis direction orthogonal to the direction in which the antenna section 32 extends. The ground electrode laid in the earth line section 33 is electrically connected to the electrode on the circuit board 17 by way of an electrical connection section 38 and electrically connected further to the ground section 24 by way of a reactance element 39, as required.

The power feed section 34, the electrical connection section 35, the power feed section 37, and the electrical connection section 38 shown in Fig. 11 have configurations analogous to the structure of the power feed section 16 shown in Figs. 1 and 2.

As mentioned above, various types of antennas can be built by use of the antenna section and the ground line section while assuring water-tightness of the neighborhood of the power feed sections and the electrical connection sections and assuring stable states of a connection between the conductor, such as the antenna, with the circuit board are facilitated.

Although the present invention has been described in detail by reference to the specific embodiment, it is manifest to those skilled in the art that the present invention be susceptible to various modifications and alterations without departing the spirit and scope of the invention.
The present patent application is based on Japanese Patent Application JP-2009-167999 filed on July 16, 2009, the entire subject matter of which is incorporated herein by reference.

### <Industrial Applicability>

The present invention is useful for a portable radio that facilitates assuring water-tightness of a neighborhood of power feed sections and is capable of assuring easily a stable state of connection between a conductor, such as an antenna, and a circuit board.

### <Descriptions of the Reference Numerals and Symbols>

10 ENCLOSURE
11 FIRST CASE
11a RIB
12 SECOND CASE
12a, 12b RIB
12c SPACING
13 ANNULAR RESILIENT MEMBER
14 FLEXIBLE PRINTED BOARD
15 ANTENNA SECTION
16 POWER FEED SECTION
17 CIRCUIT BOARD
18 ELECTRICAL CIRCUIT SECTION
19 FIRST POWER FEED SECTION
20 SECOND POWER FEED SECTION
21 ANNULAR WATERPROOF SECTION
22 AUXILIARY POWER FEED SECTION
23 POWER FEED PLATE
24 GROUND SECTION
25 POWER FEED LAND
26 POWER FEED PIN
27 EARTH LINE SECTION
28 LAND
29, 35, 38 ELECTRICAL CONNECTION SECTION
30, 36, 39 REACTANCE ELEMENT
31, 32 ANTENNA SECTION
33 EARTH LINE SECTION
34, 37 POWER FEED SECTION

## Claims

1. A portable radio having an enclosure in which a first case and a second case are combined, the radio comprising:
an annular resilient member sandwiched between the first case and the second case;
a flexible printed board integrally formed with the annular resilient member and extending toward an area surrounded by the annular resilient member;
an antenna section provided on the flexible printed board;
a first power feed section provided on the flexible printed board and electrically connected to the antenna section;
a circuit board set in the area surrounded by the annular resilient member;
an electric circuit section provided on the circuit board; and
a second power feed section electrically connected to the electric circuit section;
wherein the first power feed section opposes the annular resilient member; and
an inter-space dimension of an area interposed between the flexible printed board and a part of the enclosure opposing the flexible printed board is smaller than a thickness dimension of a part of the annular resilient member that is to be sandwiched in the area, the thickness dimension being achieved under no-load conditions, with respect to a direction where the annular resilient member is sandwiched.

2. The portable radio according to claim 1, wherein the flexible printed board and the antenna section are extended at least up to a position where the flexible printed board and the antenna section oppose the second power feed section, at least toward the area surrounded by the annular resilient member; and the second power feed section is provided on a surface of the circuit board opposing the first power feed section.

3. The portable radio according to claim 2, wherein at least a portion of the flexible printed board is formed in an annular shape along an inner circumference of the area surrounded by the annular resilient member; and a portion of the flexible printed board crosses the area surrounded by the annular resilient member.

4. The portable radio according to claim 2 or 3, wherein the first power feed section or the second power feed section has a protrusion that exhibits electrical conductivity.

5. The portable radio according to claim 1, further comprising a power feed plate for electrically connecting the first power feed section to the second power feed section.

6. The portable radio according to any one of claims 1 through 5, wherein the annular resilient member has an annular water proof section sandwiched between the first case and the second case and an auxiliary power feed section that is extended from a portion of the annular waterproof section toward an area surrounded by the annular waterproof section, wherein a thickness dimension of the annular waterproof section is smaller than a thickness dimension of the auxiliary power feed section with respect to a direction in which the annular waterproof section is sandwiched.

7. A portable radio having an enclosure in which a first case and a second case are combined, the radio comprising:
an annular resilient member sandwiched between the first case and the second case;
a flexible printed board integrally formed with the annular resilient member and extending toward an area surrounded by the annular resilient member;
an earth line section provided on the flexible printed board;
a first electrical connection section provided on the flexible printed board and electrically connected to the earth line section;
a circuit board set in the area surrounded by the annular resilient member;
a ground section provided on the circuit board; and
a second electrical connection section electrically connected to the ground section;
wherein the first electrical connection section opposes the annular resilient section; and
an inter-space dimension of an area interposed between the flexible printed board and a part of the enclosure opposing the flexible printed board is smaller than a thickness dimension of a part of the annular resilient member that is to be sandwiched in the area, the thickness dimension being achieved under no-load conditions, with respect to a direction where the annular resilient member is sandwiched.

8. The portable radio according to claim 7, wherein a reactance element is interposed between the ground section and the second electrical connection section.
